# EUROPÄISCHE PATENTSCHRIFT

(11) **EP 1 621 334 B1**
(45) Veröffentlichungstag und Bekanntmachung des Hinweises auf die Patenterteilung: **05.08.2009**
(21) Anmeldenummer: 05012814.9
(22) Anmeldetag: 15.06.2005
(51) Int. Cl.: B32B 38/06, B32B 15/08

(54) **Verfahren zur Herstellung einer Strukturierung eines Verbundwerkstoffkörpers**
Method for producing an embossment on a composite body
Procédé pour former un gaufrage sur un corps composite

(30) Priorität: 30.07.2004 DE 102004037400
(43) Veröffentlichungstag der Anmeldung: 01.02.2006
(73) Patentinhaber: Fritz Egger GmbH & Co., 3105 Unterradlberg (AT)
(72) Erfinder: Wittberg, Henning, 38162 Cremlingen (DE); Steinwender, Martin, 2380 Perchtoldsdorf (AT)
(74) Vertreter: Cohausz & Florack

(56) Entgegenhaltungen:
- DE-A1- 2 438 104
- US-A- 3 180 779

## Beschreibung

Die Erfindung betrifft ein Verfahren zur Herstellung einer Strukturierung eines Verbundwerkstoffkörpers, wobei eine Metallfolie mit einem eine dreidimensionale Struktur aufweisenden Presswerkzeug auf einen Trägerkörper gepresst wird, wobei der Trägerkörper eine Platte ist, vorzugsweise eine Holzwerkstoffplatte, und wobei zwischen der Metallfolie und dem Trägerkörper eine Kleberschicht aufgebracht wird. Ferner betrifft die Erfindung einen Verbundwerkstoffkörper mit einem Trägerkörper und einer Metallfolie, wobei der Trägerkörper mit einer aufgepressten Metallfolie verbunden ist, wobei der Trägerkörper eine Platte ist, vorzugsweise eine Holzwerkstoffplatte, und wobei zwischen der Metallfolie und dem Trägerkörper eine Kleberschicht vorgesehen ist. Eine solches Verfahren und ein solcher Verbundwerkstoffkörper sind aus der DT 24 38 104 A1 bekannt.

Bei einem Verbundwerkstoffkörper, insbesondere einer Verbundplatte, kann es wünschenswert sein, einen Trägerkörper, insbesondere eine Holzwerkstoffplatte, mit einer dreidimensional strukturierten Metalloberfläche zu versehen. Eine derart strukturierte Metalloberfläche kann beispielsweise für rutschhemmende Böden eingesetzt werden. Es ist auch denkbar, durch eine Strukturierung der Metalloberfläche einer Verbundplatte oder eines anderen Verbundwerkstoffkörpers die Steifigkeit zu erhöhen. Auch aus optischen Gründen kann eine Strukturierung gewünscht sein.

Aus dem Stand der Technik ist es bekannt, bei einem Verbundwerkstoffkörper, der als Basis eine Holzwerkstoffplatte hat, die Holzwerkstoffplatte zunächst mit einer Struktur zu versehen. Eine Struktur kann zum einen durch spanende Bearbeitung oder Prägen der Holzwerkstoffplatte selbst oder durch Aufkleben einer zuvor hergestellten, strukturierten Harzschicht hergestellt werden. Es ist auch bekannt, ein ein Kunstharz aufweisendes Laminat in einer Kurztaktpresse mit einem strukturierten Presswerkzeug aufzupressen. Anschließend wird auf die mit der Struktur versehene Holzwerkstoffplatte eine Metallfolie über die Struktur geklebt.

Ein solches Herstellungsverfahren ist relativ aufwendig. So muss zunächst die Holzwerkstoffplatte strukturiert werden bzw. mit einer zuvor hergestellten Harz-Struktur beklebt werden. Anschließend muss die Metallfolie derart aufgebracht werden, dass sich die Strukturen durch die Metallfolie hindurchdrücken, also sichtbar und spürbar werden. Letzteres ist insbesondere bei relativ feinen Strukturen aber kaum möglich, so dass Bereiche der Strukturierung nach dem Aufkleben der Metallfolie nicht mehr sichtbar und spürbar sind.

Aus der US 3,180,779 ist ebenfalls ein Verbundwerkstoffkörper und ein Verfahren zur Herstellung einer Strukturierung des Verbundwerkstoffkörpers bekannt, wobei der Verbundwerkstoffkörper aus einer transparenten Kunststoffschicht und einer mittels Kleber aufgebrachten Metallfolie besteht. Dabei wird die Metallfolie mit einem eine dreidimensionale Struktur aufweisenden Presswerkzeug, nämlich einer Presswalze, auf die Kunststoffschicht gepresst.

Ein auf diese Weise hergestelltes Laminat kann dann anschließend auf entsprechende plattenförmige Trägerkörper, beispielsweise Fußböden oder Wände, aufgebracht werden.

Der Erfindung liegt daher das technische Problem zugrunde, ein Verfahren zur Herstellung einer Strukturierung eines Verbundwerkstoffkörpers, wobei der Verbundwerkstoffkörper eine Metalloberfläche aufweisen soll, zu vereinfachen.

Das zuvor aufgezeigte technische Problem wird erfindungsgemäß bei einem Verfahren der eingangs genannten Art dadurch gelöst, dass der Pressdruck derart gewählt ist, dass beim Pressen die Struktur des Presswerkzeugs durch die Metallfolie hindurch in den Trägerkörper übertragen wird und dort dauerhaft eingeprägt bleibt.

Erfindungsgemäß ist erkannt worden, dass durch das erfindungsgemäße Verfahren, bei dem eine Metallfolie mit einem strukturierten Presswerkzeug in einen Trägerkörper gepresst wird, nur noch ein einziger Verfahrensschritt notwendig ist, um einen Verbundwerkstoffkörper herzustellen und diesen zu strukturieren. Es ist erfindungsgemäß nicht mehr erforderlich, zunächst eine Struktur auf oder in der Oberfläche eines Trägerkörpers vorzusehen und anschließend in einem weiteren Verfahrensschritt mühevoll eine Metallfolie darüber aufzubringen.

Das erfindungsgemäße Verfahren hat auch den weiteren Vorteil, dass es in herkömmlichen Pressvorrichtungen durchführbar ist, beispielsweise in einer getakteten Anlage mit einem Pressstempel oder in einer kontinuierlich laufenden Anlage mit zum Beispiel Presswalzen und/oder Pressbändern. Es muss lediglich ein geeignetes Presswerkzeug eingespannt werden, welches die gewünschte Struktur aufweist.

Überraschenderweise wurde festgestellt, dass durch das erfindungsgemäße Verfahren nicht nur eine Zeitersparnis erreicht wird, indem nur noch ein einziger Verfahrensschritt erforderlich ist, sondern es hat sich auch gezeigt, dass eine Struktur, die gleichzeitig durch die Metallfolie hindurch in den Trägerkörper eingeprägt wird, auch nach der Herstellung noch in allen Einzelheiten durch die Metallfolie hindurch sichtbar und spürbar ist. Durch das erfindungsgemäße Verfahren können also erstmalig auch relativ feine Strukturen dauerhaft und gut sichtbar und spürbar eingeprägt werden. Solche Strukturen können regelmäßig oder unregelmäßig, beispielsweise wellenförmig oder geriffelt, sogar in Form von Symbolen, Ornamenten oder Bildern, ausgebildet sein. Sie können auch derart ausgebildet sein, dass aus unterschiedlichen Blickwinkeln oder -richtungen andere Effekte sichtbar werden.

Der Trägerkörper, auf den die Metallfolie aufgebracht wird, kann aus beliebigen Materialien bestehen. Vorzugsweise sollte das Material so gewählt sein, dass das Presswerkzeug beim Einprägen der Struktur relativ leicht in den Trägerkörper eindringen kann und die Struktur im Trägerkörper auch möglichst dauerhaft bestehen bleibt. Der Trägerkörper ist also idealerweise relativ weich und möglichst wenig elastisch.

Erfindungsgemäß ist der Trägerkörper eine Platte, vorzugsweise eine Holzwerkstoffplatte, wobei zwischen der Metallfolie und dem Trägerkörper eine Kleberschicht aufgebracht ist. Insbesondere eine Holzwerkstoffplatte eignet sich für das erfindungsgemäße Herstellungsverfahren, da ein solcher Werkstoff relativ weich ist und gerade so wenig elastisch ist, dass eingeprägte Strukturen dauerhaft bestehen bleiben.

Mit einer Holzwerkstoffplatte im Sinne der Erfindung ist jegliche Form von Partikel- oder Faserplatten wie zum Beispiel mitteldichte Faserplatten (MDF), hochdichte Faserplatten (HDF) oder Faserplatten von sehr geringer Dichte (LDF) gemeint. Auch Spanplatten oder OSB-Platten (Oriented-Strands-Board) fallen unter den Begriff Holzwerkstoffplatte. Es ist auch denkbar, eine Holzwerkstoffplatte aus mehreren, miteinander verklebten Einzelplatten vorzusehen.

Es ist denkbar, dass die Kleberschicht eine Harzschicht ist, insbesondere mit einem Duroplastharz, Aminoplastharz oder Harz auf Melamin- oder Phenolbasis.

Die Kleberschicht kann aus einem oder mehreren kleber- oder harzgetränkten Papieren bestehen oder ein oder mehrere kleber- oder harzgetränkte Papiere aufweisen, die gegebenenfalls vorkondensiert bzw. getrocknet sind.

Vorzugsweise weist die Metallfolie, die zum besseren Verbinden mit einem Primer versehen sein kann, eine oder mehrere der Metalle Aluminium, Messing, Kupfer, Bronze, Silber oder Gold oder Legierung davon aus. Selbstverständlich sind abhängig von der Zweckbestimmung auch andere Metalle denkbar. Beispielsweise ist neben einem sehr weichen Material wie Aluminium auch ein relativ hartes Material wie Titan denkbar. Allerdings ist darauf zu achten, dass bei einer ungünstigen Struktur im Presswerkzeug ein hartes Folienmaterial schnell reißen kann. Bei besonders hartem Folienmaterial kann auch das Presswerkzeug schnell verschleißen. Es ist daher immer günstig, das Material des Trägerkörpers, das Material der Metallfolie und die Form bzw. Ausgestaltung des Presswerkzeugs, insbesondere auch sein Material, derart aufeinander abzustimmen, dass die Metallfolie und/oder das Presswerkzeug unbeschädigt bleibt.

Die Metallfolie kann vor oder nach dem Pressen oberflächenbehandelt werden. Insbesondere ist dabei an ein Eloxieren, ein Beschichten oder ein Bedrucken zu denken. Auch ein Bedampfen, ein Ätzen oder ein Lackieren sind denkbare Methoden zur vorherigen oder weiteren Oberflächenbehandlung.

Das aufgezeigte technische Problem wird erfindungsgemäß auch bei einem Verbundwerkstoffkörper der eingangs genannten Art dadurch gelöst, dass eine dreidimensionale Struktur im Verbundwerkstoffkörper vorgesehen ist, die durch die Metallfolie hindurch in den Trägerkörper reicht.

Wie bereits zuvor angedeutet, kommt es bei dem Verbundwerkstoffkörper darauf an, dass nach dem Pressvorgang sowohl im Trägerkörper als auch in der Metallfolie die dreidimensionale Struktur sichtbar und spürbar ist. Bei dem Trägerkörper handelt es sich, wie gesagt, um eine Platte, wobei sich dann eine Kleberschicht zwischen Metallfolie und Platte befindet, so dass bei gleichzeitigem Einführen von Metallfolie, Kleberschicht und Trägerkörper in die Pressvorrichtung die dreidimensionale Struktur durch die Metallfolie hindurch in den Trägerkörper, beispielsweise in die Holzwerkstoffplatte, reicht.

Der erfindungsgemäße Verbundwerkstoffkörper kann neben dem Trägerkörper und der Metallfolie selbstverständlich auch noch einen weiteren, unter dem Trägerkörper angebrachten Grundkörper, beispielsweise einer weiteren Platte, aufweisen. Auch kann sich unter dem Trägerkörper und/oder dem Grundkörper eine weitere Beschichtung, vorzugsweise ein Gegenzug, der ein Verformen oder Verziehen verhindert, vorgesehen sein. Dementsprechend kann bei dem Verfahren zur Herstellung einer Strukturierung gemäß der vorliegenden Erfindung neben der Metallfolie, dem Trägerkörper und der Kleber- oder Harzschicht, also zumindest noch ein weiterer Körper, beispielsweise eine Grundplatte, vorzugsweise ein Holzwerkstoffplatte, in die Pressvorrichtung eingeführt werden. Der Verbundwerkstoffkörper besteht also zumindest aus dem Trägerkörper, einer Metallfolie und einer dazwischen angeordneten Kleberschicht, die auch eine Harzschicht sein kann.

Selbstverständlich ist es auch denkbar, den zuvor beschriebenen Aufbau des Verbundwerkstoffkörpers beidseitig vorzusehen, so dass auf einen Trägerkörper beidseitig eine Metallfolie aufgepresst wird bzw. aufgepresst ist.

Es gibt nun eine Vielzahl von Möglichkeiten, das erfindungsgemäße Verfahren und den erfindungsgemäßen Verbundwerkstoffkörper auszugestalten und weiterzubilden. Hierzu wird beispielsweise verwiesen einerseits auf die dem Patentanspruch 1 und dem Patentanspruch 7 jeweils nachgeordneten Patentansprüche, andererseits auf die Beschreibung eines Ausführungsbeispiels in Verbindung mit der Zeichnung. In der Zeichnung zeigen:
- Figuren 1a) und b): die Herstellung eines Verbundwerkstoffkörpers nach dem Stand der Technik und
- Figuren 2a) und b): die Herstellung eines Ausführungsbeispiels eines erfindungsgemäßen Verbundwerkstoffkörpers.

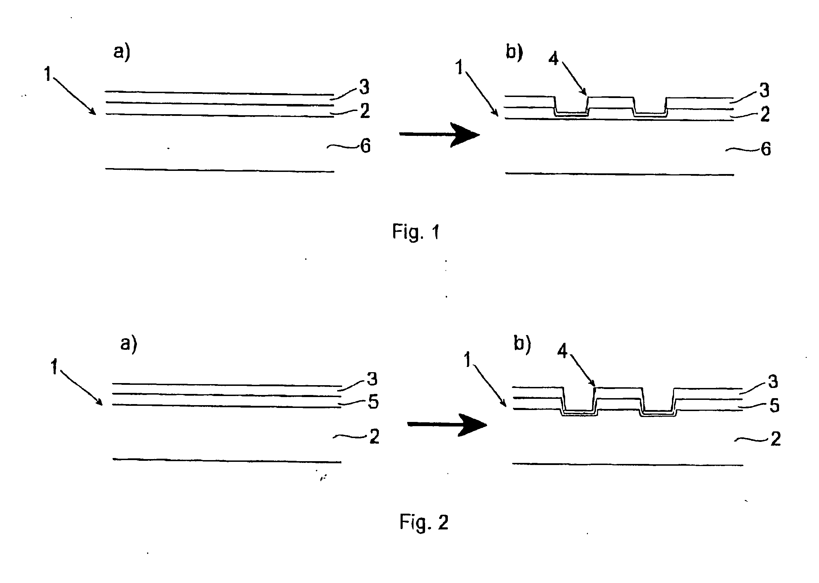

Fig. 1a) zeigt die einzelnen Schichten eines herzustellenden und zu strukturierenden Verbundwerkstoffkörpers 1, vor einem Pressvorgang, bei dem ein Presswerkzeug eine Struktur 4 einprägt. In Figur 1a) und b) hat der Verbundwerkstoffkörper 1 den folgenden Aufbau:

Als oberste Schicht ist eine Metallfolie 3 vorgesehen, darunter eine Harzschicht 2 und darunter ein plattenförmiger Grundkörper 6.

Während des Pressvorgangs dringt gemäß dem hier dargestellten Stand der Technik das Presswerkzeug soweit in den Verbundwerkstoffkörper 1 ein, dass eine dreidimensionale Struktur 4 entsteht, und zwar derart, dass sie durch die Metallfolie 3 hindurch in die Harzschicht reicht. Der Grundkörper 6 wird dabei nicht mitgeprägt.

Fig. 2a) zeigt ein Ausführungsbeispiel gemäß der vorliegenden Erfindung, bei dem der Verbundwerkstoffkörper wie folgt aufgebaut ist:

Zunächst ist als oberste Schicht eine Metallfolie 3 vorgesehen, darunter ein Trägerkörper 2 in Form einer Holzwerkstoffplatte, wobei zwischen der Holzwerkstoffplatte und der Metallfolie eine Kleberschicht 5 vorgesehen ist.

In Fig. 2b) ist zu erkennen, dass der Pressdruck bei diesem Ausführungsbeispiel derart gewählt ist, dass beim Pressen die Struktur 4 durch die Metallfolie 3 hindurch in den Trägerkörper 2 übertragen wird, und zwar durch die Kleberschicht 5 hindurch.

## Patentansprüche

1. Verfahren zur Herstellung einer Strukturierung eines Verbundwerkstoffkörpers (1), wobei eine Metallfolie (3) mit einem eine dreidimensionale Struktur (4) aufweisenden Presswerkzeug auf einen Trägerkörper (2) gepresst wird, wobei der Trägerkörper (2) eine Platte ist, vorzugsweise eine Holzwerkstoffplatte, und wobei zwischen der Metallfolie (3) und dem Trägerkörper (2) eine Kleberschicht (5) aufgebracht wird, **dadurch gekennzeichnet, dass** der Pressdruck derart gewählt ist, dass beim Pressen die Struktur (4) des Presswerkzeugs durch die Metallfolie (3) hindurch in den Trägerkörper (2) übertragen wird und dort dauerhaft eingeprägt bleibt.

2. Verfahren nach Anspruch 1, **dadurch gekennzeichnet, dass** die Kleberschicht (5) eine Harzschicht ist, insbesondere mit einem Duroplastharz, Aminoplastharz oder Harz auf Melamin-oder Phenolbasis.

3. Verfahren nach Anspruch 2, **dadurch gekennzeichnet, dass** die Kleber- (5) oder Harzschicht ein oder mehrere kleber- oder harzgetränkte Papiere aufweist.

4. Verfahren nach einem der Ansprüche 1 bis 3, **dadurch gekennzeichnet, dass** die Metallfolie (3) eines oder mehrere der Metalle Aluminium, Messing, Kupfer, Bronze, Silber oder Gold oder Legierungen davon aufweist.

5. Verfahren nach einem der Ansprüche 1 bis 4, **dadurch gekennzeichnet, dass** beim Pressen eine regelmäßige oder unregelmäßige, insbesondere wellenförmige oder geriffelte, Struktur (4) erzeugt wird.

6. Verfahren nach einem der Ansprüche 1 bis 5, **dadurch gekennzeichnet, dass** die Metallfolie (3) vor oder nach dem Pressen oberflächenbehandelt, insbesondere eloxiert, beschichtet oder bedruckt, wird.

7. Verbundwerkstoffkörper (1) mit einem Trägerkörper (2) und einer Metallfolie (3), insbesondere hergestellt und strukturiert nach einem Verfahren nach einem der Ansprüche 1 bis 6, wobei der Trägerkörper (2) mit einer aufgepressten Metallfolie (3) verbunden ist, wobei der Trägerkörper (2) eine Platte ist, vorzugsweise eine Holzwerkstoffplatte, und wobei zwischen der Metallfolie (3) und dem Trägerkörper (2) eine Kleberschicht (5) vorgesehen ist, **dadurch gekennzeichnet, dass** eine dreidimensionale Struktur (4) im Verbundwerkstoffkörper vorgesehen ist, die durch die Metallfolie (3) hindurch in den Trägerkörper (2) reicht.

8. Verbundwerkstoffkörper (1) nach Anspruch 7, **dadurch gekennzeichnet, dass** die Kleberschicht (5) eine Kleber-oder Harzschicht ist, insbesondere mit einem Duroplastharz, Aminoplastharz oder Harz auf Melamin- oder Phenolbasis.

9. Verbundwerkstoffkörper (1) nach Anspruch 8, **dadurch gekennzeichnet, dass** die Kleber- (5) oder Harzschicht ein oder mehrere kleber- oder harzgetränkte Papiere aufweist.

10. Verbundwerkstoffkörper (1) nach einem der Ansprüche 7 bis 9, **dadurch gekennzeichnet, dass** die Metallfolie (3) eines oder mehrere der Metalle Aluminium, Messing, Kupfer, Bronze, Silber oder Gold oder Legierungen davon aufweist.

11. Verbundwerkstoffkörper (1) nach einem der Ansprüche 7 bis 10, **dadurch gekennzeichnet, dass** die Struktur (4) im Verbundwerkstoffkörper (1) regelmäßig oder unregelmäßig, insbesondere wellenförmig oder geriffelt, ausgebildet ist.

12. Verbundwerkstoffkörper (1) nach einem der Ansprüche 7 bis 11, **dadurch gekennzeichnet, dass** die Metallfolie (3) oberflächenbehandelt, insbesondere eloxiert, beschichtet oder bedruckt, ist.

## Claims

1. A method for producing a surface structure of a composite material body (1) wherein a metal foil (3) is pressed on a substrate body (2) using a compression molding die having a three-dimensional texture (4), the substrate body (2) being a board, preferably an engineered wood board, and wherein between the metal foil (3) and the substrate body (2) an adhesive layer (5) is applied, **characterized in that** the pressing power is selected such that during pressing the texture (4) of the compression molding die is transferred through the metal foil (3) into the substrate body (2) and remains permanently embossed there.

2. The method according to claim 1, **characterized in that** the adhesive layer (5) is a resin layer, in particular with a duroplastic resin, an amino resin or a resin based on melamine or phenol.

3. The method according to claim 2, **characterized in that** the adhesive (5) or resin layer comprises one or multiple papers impregnated with adhesive or resin.

4. The method according to one of claims 1 to 3, **characterized in that** the metal foil (3) comprises one or a plurality of the metals aluminum, brass, copper, bronze, silver, or gold, or alloys thereof.

5. The method according to one of claims 1 to 4, **characterized in that** during pressing a regular or irregular, in particular undulating or corrugated texture (4) is generated.

6. The method according to one of claims 1 to 5, **characterized in that** previous to or after pressing the metal foil (3) undergoes a surface treatment, in particular anodizing, coating, or printing.

7. A composite material body (1) comprising a substrate body (2) and a metal foil (3), in particular produced and textured according to the method as claimed in one of claims 1 to 6, wherein the substrate body (2) is joined with a pressed-on metal foil (3), wherein the substrate body (2) is a board, preferably an engineered wood board, and wherein between the metal foil (3) and the substrate body (2) an adhesive layer (5) is provided, **characterized in that** a three-dimensional texture (4) is provided in the composite material body reaching through the metal foil (3) into the substrate body (2).

8. The composite material body (1) according to claim 7, **characterized in that** the adhesive layer (5) is a layer of adhesive or resin, in particular with a duroplastic resin, an amino resin or a resin based on melamine or phenol.

9. The composite material body (1) according to claim 8, **characterized in that** the layer of adhesive (5) or resin comprises one or multiple papers impregnated with adhesive or resin.

10. The composite material body (1) according to one of claims 7 to 9, **characterized in that** the metal foil (3) comprises one or multiple of the metals aluminum, brass, copper, bronze, silver, or gold, or alloys thereof.

11. The composite material body (1) according to one of claims 7 to 10, **characterized in that** during pressing a regular or irregular, in particular undulating or corrugated texture (4) is produced.

12. The composite material body (1) according to one of claims 7 to 11, **characterized in that** the metal foil (3) is surface treated, in particular by anodizing, coating, or printing.

## Revendications

1. Procédé pour la fabrication d'une structure d'un corps de matériau composite (1), où une feuille métallique (3) est pressée sur un corps support (2) avec un outil de pressage présentant une structure tridimensionnelle (4), le corps support (2) étant une plaque, de préférence une plaque en matériau de bois, et une couche adhérente (5) étant appliquée entre la feuille métallique (3) et le corps support (2), **caractérisé en ce que** la pression de pressage est sélectionnée de sorte que lors du pressage, la structure (4) de l'outil de pressage est transmise par la feuille métallique (3) au corps support (2) et y reste imprimée durablement.

2. Procédé selon la revendication 1, **caractérisé en ce que** la couche adhérente (5) est une couche de résine, en particulier avec une résine duroplaste, aminoplaste ou une résine à base de mélanine ou de phénol.

3. Procédé selon la revendication 2, **caractérisé en ce que** la couche adhérente (5) ou de résine présente un ou plusieurs papiers imprégnés de résines ou de colle.

4. Procédé selon l'une des revendications 1 à 3, **caractérisé en ce que** la feuille métallique (3) présente un ou plusieurs des métaux tels que l'aluminium, le laiton, le cuivre, le bronze, l'argent ou l'or ou des alliages de ces derniers.

5. Procédé selon l'une des revendications 1 à 4, **caractérisé en ce que** lors du pressage, il est généré une structure (4), régulière ou irrégulière, en particulier ondulée ou nervurée.

6. Procédé selon l'une des revendications 1 à 5, **caractérisé en ce que** la feuille métallique (3) est traitée en surface, en particulier anodisée, enduite ou imprimée, avant ou après le pressage.

7. Corps de matériau composite (1) avec un corps support (2) et une feuille métallique (3), fabriquée et structurée en particulier selon un procédé conforme à l'une des revendications 1 à 6, le corps support (2) étant relié à une feuille métallique pressée (3), le corps support (2) étant une plaque, de préférence une plaque en matériau en bois, et une couche adhérente (5) étant prévue entre la feuille métallique (3) et le corps support (2), **caractérisé en ce qu'**une structure tridimensionnelle (4) est prévue dans le corps de matériau composite qui traverse la feuille métallique (3) pour atteindre le corps support (2).

8. Corps de matériau composite (1) selon la revendication 7, **caractérisé en ce que** la couche adhérente (5) est une couche de colle ou de résine, en particulier avec une résine duroplaste, aminoplaste ou une résine à base de mélamine ou de phénol.

9. Corps de matériau composite (1) selon la revendication 8, **caractérisé en ce que** la couche de résine ou de colle (5) présente un ou plusieurs papiers imprégnés de résine ou de colle.

10. Corps de matériau composite (1) selon l'une des revendications 7 à 9, **caractérisé en ce que** la feuille métallique (3) présente un ou plusieurs de métaux tels que l'aluminium, le laiton, le cuivre, le bronze, l'argent ou l'or ou des alliages de ces derniers.

11. Corps de matériau composite (1) selon l'une des revendications 7 à 10, **caractérisé en ce que** la structure (4) est formée dans le corps de matériau composite (1) régulièrement ou irrégulièrement, en particulier de manière ondulée ou nervurée.

12. Corps de matériau composite (1) selon l'une des revendications 7 à 11, **caractérisé en ce que** la feuille métallique (3) est traitée en surface, en particulier anodisée, enduite ou imprimée.
